# EUROPÄISCHE PATENTSCHRIFT

(11) **EP 0 855 547 B1**
(45) Veröffentlichungstag und Bekanntmachung des Hinweises auf die Patenterteilung: **03.05.2000**
(21) Anmeldenummer: 98101278.4
(22) Anmeldetag: 26.01.1998
(51) Int. Cl.: F16L 55/16, F16L 55/162, F16L 55/28, E03F 3/06

(54) **Vorrichtung zur Sanierung von Kanalrohren**
Device for the repair of ducts
Dispositif de réparation de canalisations

(30) Priorität: 25.01.1997 DE 19702649
(43) Veröffentlichungstag der Anmeldung: 29.07.1998
(73) Patentinhaber: Ludwig Dorr Städtereinigung, 87439 Kempten/Allgäu (DE)
(72) Erfinder: Wolff, Reinhard, 87474 Buchenberg (DE); Sommer, Johann, 87496 Untrasried (DE)
(74) Vertreter: Patentanwälte Eisele, Otten, Roth & Dobler

(56) Entgegenhaltungen:
- EP-A- 0 674 132
- EP-A- 0 683 347
- US-A- 5 527 133

## Beschreibung

Die Erfindung betrifft eine Vorrichtung zur Sanierung von Kanalrohren nach dem Oberbegriff des Anspruchs 1.

Zur Sanierung von Kanalrohren sind bereits verschiedene sogenannte Sanierungspacker bekannt geworden. Ein solcher Sanierungspacker wird zum Abdichten eines defekten Bereichs des Kanalrohrs in diesen Bereich eingeführt und dichtet, beispielsweise durch Aufblasen einer äußeren, flexiblen Hülle diesen Bereich ab. Anschließend wird ein aushärtbares und dichtendes Material unter Druck verpreßt.

Weiterhin ergibt sich bei der Kanalsanierung das Problem, defekte Stellen eines Kanalrohres zu sanieren, die sich im Bereich einer Abzweigung oder Stichleitung, beispielsweise eines Hausanschlusses befinden. In diesem Fall muß dafür gesorgt werden, daß die Anschlußleitung durch das verpreßte Material nicht verstopft wird. Zu diesem Zweck wurden bereits verschiedene Vorrichtungen verwendet. So wird beispielsweise in der DE 44 15 962 eine Vorrichtung beschrieben, bei der eine aufblasbare Blase in den zu sanierenden Hausanschluß eingeführt wird. Zudem wird eine Schalungsplatte vorgesehen, die fest an die Innenwandung des Hauptkanals angepreßt wird, so daß in den Zwischenraum zwischen Schalungsplatte und Hauptkanal ein Füllstoff zum Sanieren des Kanals gebracht werden kann.

Weiterhin wurde mit der DE 42 13 898 ein Sanierungspacker bekannt, der einen aufblähbaren, zylindrischen Körper aus zusammenfaltbaren flexiblen Material umfaßt, an dessen Stirnenden scheibenförmige Abschlußplatten vorgesehen sind. Der aufblähbare Körper ist mit einem in die Stichleitung einfahrbaren und aus dieser zurückziehbaren, aufblähbaren, zylindrischen Ansatz versehen. Die elastische Außenhülle dieser Vorrichtung dient somit zum Abdichten des Hauptrohres und zugleich der Abzweigleitung. Durch diese Ausbildung kann es jedoch unmittelbar im Bereich der Abzweigung beim Verpressen von Material unter hohem Druck zu Materialüberständen kommen, die nach dem Aushärten des Materials das Herausziehen des Sanierungspackers erschweren, wenn nicht gar verhindern.

Mit der nachveröffentlichten DE 197 02 649 wiederum wurde ein Sanierungspacker beschrieben, der einen separaten Zusatzdichtkörper aufweist. Der Hauptdichtkörper dichtet den Hauptkanal durch aufblähbare Wülste im Bereich der Stirnseiten auf, während der Zusatzdichtkörper vollständig in den Sanierungspacker wieder einfahrbar ist. Dieser Sanierungspacker ist somit nach dem Verpressen von Material problemlos dem Kanalrohr zu entnehmen.

Der Sanierungspacker gemäß der vorbeschriebenen Ausführung ist nur mit vollständig ausgefahrenem Zusatzdichtkörper verwendbar. Die Führung im Innern des Sanierungspackers ist soweit vom Zusatzdichtkörper beabstandet, daß beim Aufblähen des Zusatzdichtkörpers in nur teilweise ausgefahrenem Zustand sich der im Innern des Sanierungspackers befindliche Teil des Zusatzdichtkörpers überdehnen würde.

Einerseits besteht jedoch das Bestreben, den Zusatzdichtkörper vergleichsweise weit in eine Abzweigleitung einzufahren, um einen großen Bereich zu sanieren. Andererseits besteht jedoch die Möglichkeit, daß in der Abzweigleitung Querschnittsverjüngungen oder Winkel auftreten, die für den Zusatzdichtkörper beim Einfahren ein Hindernis darstellen. Bei der Verwendung von Sanierungspackern nach dem Stand der Technik müssen hierzu unterschiedlich lange Zusatzdichtkörper vorgesehen werden.

Aufgabe der Erfindung ist es daher, einen Sanierungspacker mit separatem Zusatzdichtkörper vorzuschlagen, der mit unterschiedlichen Einfahrtiefen verwendbar ist.

Diese Aufgabe wird ausgehend von einem Sanierungpacker der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung zur Sanierung von Kanalrohren dadurch aus, daß der Zusatzdichtkörper in teilweise ausgefahrenem Zustand aufblähbar ist, wobei Mittel zur Volumenbegrenzung für den nicht ausgefahrenen Teil der aufblähbaren Hülle des Zusatzdichtkörpers vorgesehen sind.

Derartige Volumenbegrenzungen können beispielsweise dadurch erzeugt werden, daß die aufblähbare Hülle des Zusatzdichtkörpers in separate Kammern unterteilt ist, die einzeln je nach Bedarf aufzublähen sind.

In einer vorteilhaften Weiterbildung der Erfindung wird jedoch ein den nicht ausgefahrenen Teil der aufblähbaren Hülle des Zusatzdichtkörpers wenigstens teilweise umschließender starrer Rahmen vorgesehen. Somit wird bei Druckbeaufschlagung des aufblähbaren Zusatzdichtkörpers das Volumen des nicht ausgefahrenen Teils durch den genannten Rahmen begrenzt, wobei der ausgefahrene Teil von der entsprechenden Kanal-Abzweigleitung umschlossen ist. Durch diese Maßnahme ist der Zusatzdichtkörper stufenlos in jeder beliebigen Eintauchtiefe verwendbar.

Vorteilhafterweise wird ein Antrieb zum Ein- und Ausfahren des Zusatzdichtkörpers vorgesehen, der eine solche stufenlose Eintauchtiefe ermöglicht. Ein solcher Antrieb kann beispielsweise hydraulisch, pneumatisch oder aber auch elektrisch ausgebildet sein. In einer besonders vorteilhaften Ausführungsform wird ein Elektromotor an dem Teil der Vorrichtung angebracht, der sich im Hauptrohr befindet und problemlos mit Strom zu versorgen ist. Somit befindet sich der Antriebsmotor unmittelbar am zu bewegenden Dichtkörper, so daß lange mechanische Kraftübertragungen entfallen können.

Bevorzugt wird ein Schlitten vorgesehen, der mit dem Zusatzdichtkörper verbunden ist und der an einer Führung gelagert ist. Eine solche Führung kann beispielsweise eine Liniarführung sein, die im wesentlichen parallel zum Hauptrohr verläuft, jedoch ohne weiteres auch eine Krümmung in Ausfahrrichtung aufweisen kann. Der Zusatzdichtkörper wird an diesen Schlitten befestigt und ist somit im Hauptrohr verschiebbar. Über entsprechende Führungselemente kann der Zusatzdichtkörper, der bevorzugt aus biegsamem Material gefertigt wird, um einen Bogen abgelenkt und durch eine entsprechende Öffnung des im Hauptkanal befindlichen Teils der Vorrichtung in den Abzweig eingeschoben.

In einer besonderen Ausführungsform wird der Antrieb mit einem Getriebe und/oder einer Kraftbegrenzung versehen.

Hierdurch ist ein besonders behutsames Einführen des Zusatzdichtkörpers in die Abzweigung möglich. In einer Weiterbildung dieser Ausführungsform wird als Antriebselement zwischen dem fahrbaren Zusatzdichtkörper und dem Elektromotor ein Zugelement verwendet, das mit beiden Enden am Zusatzdichtkörper bzw. am zugehörigen Schlitten befestigt ist. Über entsprechende Führungen kann dieses Zugseil so zur Welle des Antriebsmotors gelenkt werden, daß je nach Umdrehungsrichtung des Antriebsmotors der Zusatzdichtkörper aus- bzw. eingefahren wird.

In einer bevorzugten Weiterbildung dieser Erfindung wird das Zugseil hierbei um eine Winde gewickelt, auf der ein gewisser Schlupf möglich ist. Somit ist in einem Bauelement eine Art Übsetzungsgetriebe (je nach Durchmesser der Winde) und eine Kraftbegrenzung durch den Schlupf gegeben, der gewissermaßen eine Art Rutschkupplung bildet.

In einer besonders vorteilhaften Ausführungsform wird für die gesamte Vorrichtung zum Einführen in den Hauptkanal, beispielsweise ausgehend von einem Einstiegsschacht ein separater Antriebswagen mit Laufrädern und Motor vorgesehen.

In einer Weiterbildung dieser Ausführungsform wird zusätzlich ein Zugseil am Antriebswagen befestigt, um den selbstfahrenden Antriebswagen beim Zurückfahren der gesamten Vorrichtung zu unterstützen, falls dieser auf Widerstand stößt.

Die in das Hauptrohr einzuführende Vorrichtung wird bevorzugt drehbar ausgestattet und mit Hilfe einer Gelenkwelle mit einem Drehmotor auf dem Antriebswagen verbunden. Damit kann die Sanierungsvorrichtung im Innern des Hauptkanals so gedreht werden, daß die Austrittsöffnung des Zusatzdichtkörpers vor dem Abzweig liegt. Damit der Antriebswagen hierbei drehfest im Hauptkanal ruht, kann dieser mit entsprechenden Befestigungselementen, beispielsweise Spreizelementen und/oder einer schweren Bodenplatte versehen werden.

Bevorzugt wird ein Zwischengetriebe zum Antrieb der Gelenkwelle vorgesehen, so daß der Antriebsmotor auf dem Antriebswagen entsprechend kleiner dimensioniert werden kann und die Drehbewegung der Sanierungsvorrichtung im Kanalrohr mit geeigneter Geschwindigkeit vorgenommen wird.

Bevorzugt werden Rollen an der Sanierungsvorrichtung angebracht, um das Drehen im Hauptrohr zu erleichtern.

In einer besonders vorteilhaften Ausführungsform wird eine Sensorik zur Drucküberwachung des Verpressungsdrucks für das dichtende Material vorgesehen. Eine derartige Sensorik kann Sensoren umfassen, die unmittelbar am Außenbereich des im Hauptrohr befindlichen Teils der Sanierungsvorrichtung angeordnet werden. Weiterhin kann ein solcher Sensor auch am Zusatzdichtkörper angebracht werden. Diese Sensoren erfassen unmittelbar den Druck des verpreßten Material im Verpressungsbereich des Kanals bzw. des Abzweigs. In einer Weiterbildung der Erfindung kann ein solcher Sensor jedoch auch im Drucksystem der Verpressungsvorrichtung angeordnet werden.

Der Zusatzdichtkörper bzw. dessen Antriebsmittel werden bevorzugt lösbar in der Gesamtvorrichtung angeordnet. Dies hat den Vorteil, daß der das Hauptrohr abdichtende Teil des Sanierungspackers je nach erforderlichem Rohrdurchmesser gewählt werden kann und anschließend mit dem Zusatzdichtkörper versehen wird. Somit ist ein und derselbe Zusatzdichtkörper ggf. einschließlich seiner Antriebs- und Führungselemente sowie sonstiger fest installierter Bauteile, wie die Kamera 15 etc., flexibel in unterschiedlich großen Kanalsystemen verwendbar, wodurch die Verfahrenskosten reduziert werden.

Ein Ausführungsbeispiel der Erfindung ist in der Zeichnung dargestellt und wird anhand der Figuren nachfolgend näher erläutert:

Im einzelnen zeigen
- Fig. 1: eine perspektivische Darstellung der gesamten Sanierungsvorrichtung,
- Fig. 2: eine Teildarstellung der Führung des Zusatzdichtkörpers,
- Fig. 3: eine vergrößerte Darstellung der Führung des Zusatzdichtkörpers,
- Fig. 4: eine schematische Darstellung eines Schlittens zur Bewegung des Zusatzdichtkörpers,
- Fig. 5: eine schematische Darstellung des Aufbaus des Zusatzdichtkörpers,
- Fig. 6: eine schematische Darstellung des Verpressungssystems für das Material und
- Fig. 7: eine perspektivische Darstellung eines Antriebswagens zum Einführen der erfindungsgemäßen Vorrichtung in ein Kanalsystem.

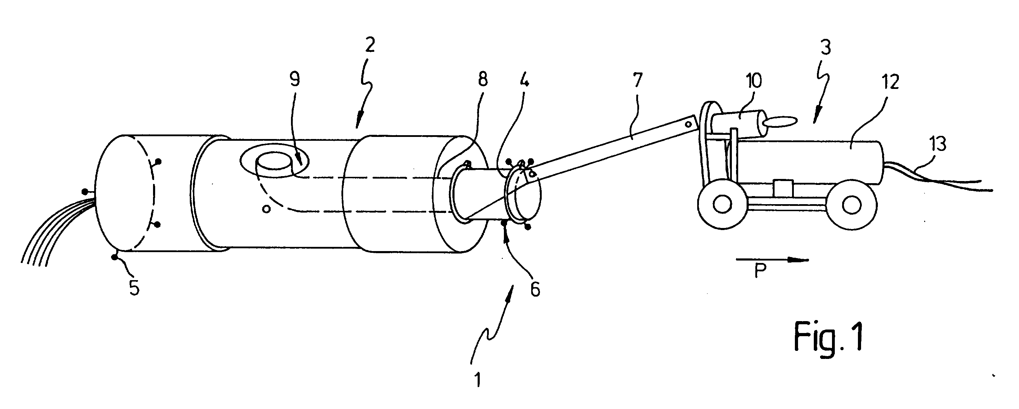

Die Fig. 1 zeigt eine erfindungsgemäße Vorrichtung 1, die einen sogenannten Sanierungspacker 2 und einen zum Einführen des Sanierungspackers 2 vorgesehenen Antriebswagen 3 umfaßt.

An dem Sanierungspacker 2 sowie an einer Spannschelle 4 sind Rollenanordnungen 5, 6 angebracht. Die Spannschelle 4 ist mit einer Gelenkwelle 7 und einem Rahmen 8 verbunden, an dem der komplette Aufbau und Antrieb eines Zusatzdichtkörpers 9 befestigt ist.

Wie anhand von Fig. 1 ersichtlich, ist die Vorrichtung modular aufgebaut. Die den Zusatzdichtkörper 9 beinhaltende Einheit kann aus dem Sanierungspacker 2 in axialer Richtung vollständig entnommen werden. Der gemäß Fig. 1 dargestellte Zustand zeigt die Vorrichtung 1 beim Zusammenbau. In fertig montiertem Zustand muß die Spannschelle 4 in den Sanierungspacker 2 eingeschoben und an diesem verspannt sein.

Der Antriebswagen 3 umfaßt einen Drehantrieb 10 zum Drehen der Gelenkwelle 7 und somit des gesamten Sanierungspackers 2. Am Drehantrieb 10 ist eine Zugöse 11 befestigt, an der der Antriebswagen in Richtung des Pfeils p mit Hilfe eines nicht näher dargestellten, an der Zugöse 11 zu befestigenden Zugseils aus dem Kanal herausgezogen werden kann. Weiterhin umfaßt der Antriebswagen 3 einen Fahrmotor 12. Verschiedene Kabel 13 dienen zur Energieversorgung und Steuerung der Motoren 10, 12.

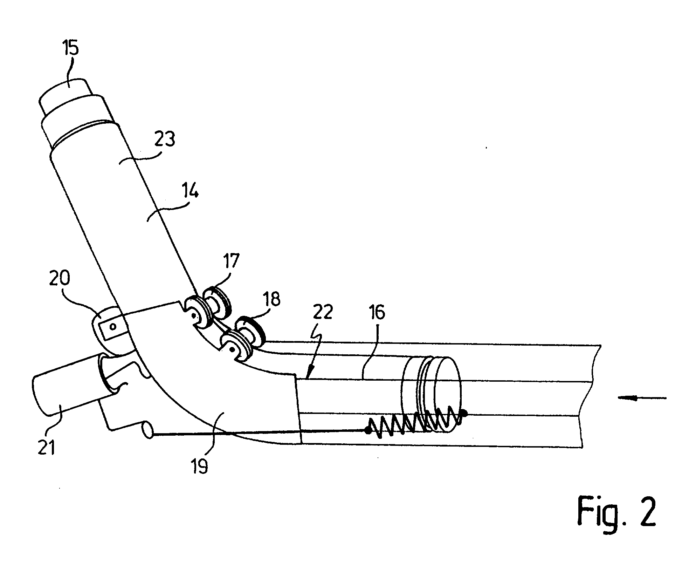

In der Darstellung gemäß Fig. 2 ist der Zusatzdichtkörper 14 mit vorgesetzter Kamera 15 abgebildet. Der Zusatzdichtkörper 14 ist biegeelastisch in einem festen, in Fig. 2 nur angedeuteten Metallkorb 16 geführt. Im Bereich der Biegung ist eine oben durch Führungsrollen 17, 18 geschlossenen Halbschale 19 am Metallkorb 16 befestigt. Im Bereich der Austrittsöffnung des Zusatzdichtkörpers 14 aus der Halbschale 19 ist auch an der Rückseite eine weitere Führungsrolle 20 angebracht. Unterhalb der Halbschale 19 ist zudem ein Antriebsmotor 21 für das Ein- und Ausfahren des Zusatzdichtkörpers 14 erkennbar.

Der dargestellte Zustand zeigt den Zusatzdichtkörper 14 in teilweise ausgefahrener Länge. Durch den festen Metallkorb 16 in Verbindung mit der Halbschale 19 und den Führungsrollen 17, 18 ist der im Innern des Sanierungspackers 2 befindliche Teil 22 des Zusatzdichtkörpers 14 in seinem Ausdehnungsvolumen begrenzt. Der herausragende Teil 23 kann somit auf die gewünschte Länge eingestellt und aufgebläht werden.

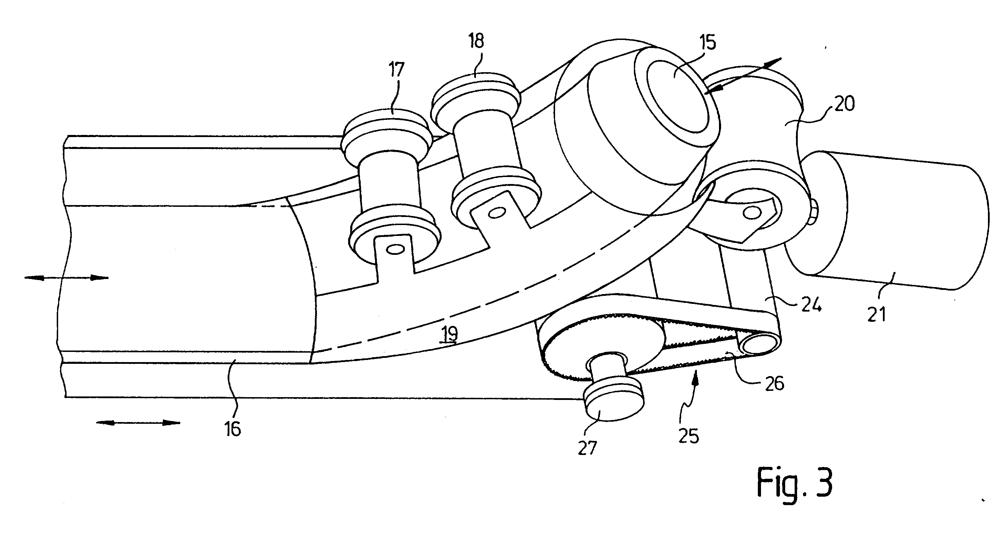

In Fig. 3 ist erkennbar, daß mit Hilfe des Antriebsmotors 21 über ein Winkelgetriebe 24 ein Übersetzungsgetriebe 25 angetrieben wird, das einen Zahnriemen 26 umfaßt. Eine Seilwinde 27 wird über das Winkelgetriebe 24 sowie das Übersetzungsgetriebe 25 vom Antriebsmotor 21 gedreht.

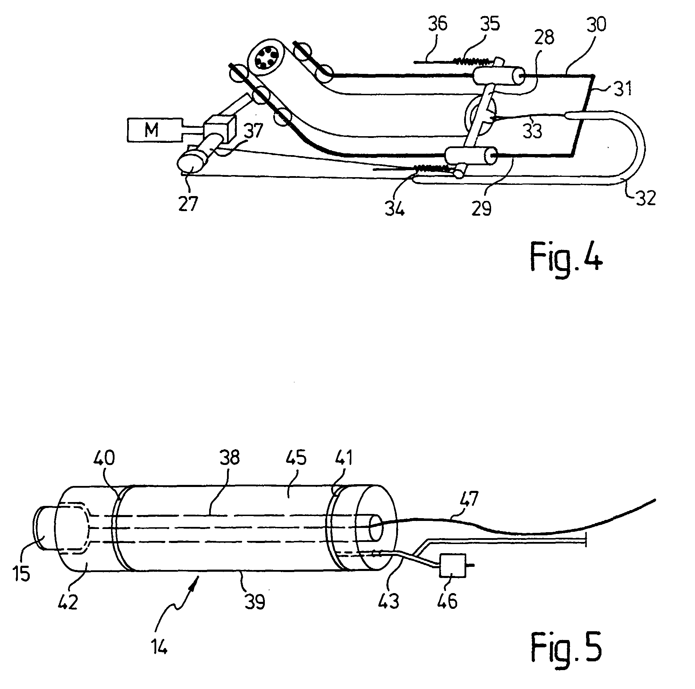

In der Darstellung gemäß Fig. 4 ist erkennbar, daß ein Schlitten 28 an zwei Führungsstangen 29, 30 geführt ist. Eine Querstrebe 31 dient u. a. als Halterung für einen Bowdenzug 32, in dem ein Zugseil 33 geführt ist. Die Führungsstangen 29, 30 können beispielsweise Bestandteil des Metallkorbs 16 sein.

Das Zugseil 33 ist zentral am Schlitten 28 befestigt. Es wird um die Seilwinde 27 gewickelt und anschließend unter Zwischenschaltung einer Zugfeder 34 an einer Seite mit dem Schlitten 28 verbunden. Auf der gegenüberliegenden Seite ist eine weitere Zugfeder 35 sowie ein weiteres Zugseil 36 angedeutet, wobei das Zugseil 36 in gleicher Weise zu führen ist, wie das Zugseil 33. Dementsprechend ist eine zweite, nicht näher dargestellte Seilwinde auf der Seilwinde 27 gegenüberliegenden Seite der zugehörigen Antriebswelle 37 vorzusehen. Durch diese symmetrische Anordnung wird verhindert, daß sich der Schlitten 28 in seinen Führungen 29, 30 verkanten kann.

Die Seilwinde 27 ergibt zum einen ein Übersetzungsgetriebe infolge des gegenüber der Antriebswelle 37 größeren Durchmessers der Seilwinde 27 und zum anderen eine Zugkraftbegrenzung, da die Seilwinde 27 mit Schlupf in dem Wickel des Zugseils 33 laufen kann. Zur Einstellung der Reibungskraft dient die Zugfeder 34. Je nach gewünschter Maximalzugkraft kann die Vorspannung der Zugfeder 34 eingestellt werden.

Die Fig. 5 zeigt den Zusatzdichtkörper 14 in gestreckter Form. Er umfaßt einen inneren, durch gestrichelte Linien angedeuteten Spiralschlauch 38 sowie einen äußeren dehnbaren Gummischlauch 39, die mittels Schlauchschellen 40, 41 miteinander verbunden sind. In das Endstück 42 ist die Kamera 15 integriert. Eine Druckluftleitung 44 dient dazu, den Zwischenraum 45 zwischen dem Spiralschlauch 38 und dem Gummischlauch 39 mit Druckluft zu befüllen. Der Fülldruck ist mit einem Drucksensor 46 zu überwachen. Der Fülldruck des Gummischlauchs 39 wird auch von dem anschließenden Verpressungsvorgang beeinflußt. Somit kann über den Sensor 46 auch der Verpressungsdruck während der Materialverpressung überwacht werden.

Im Innern des Spiralschlauchs 38 ist beispielhaft eine Leitung 47 zum Anschluß der Kamera 15 dargestellt. Über diesen Durchgang können beliebige Installationen bis in den Bereich des Endstücks 42 des Zusatzdichtkörpers 14 durchgeführt werden.

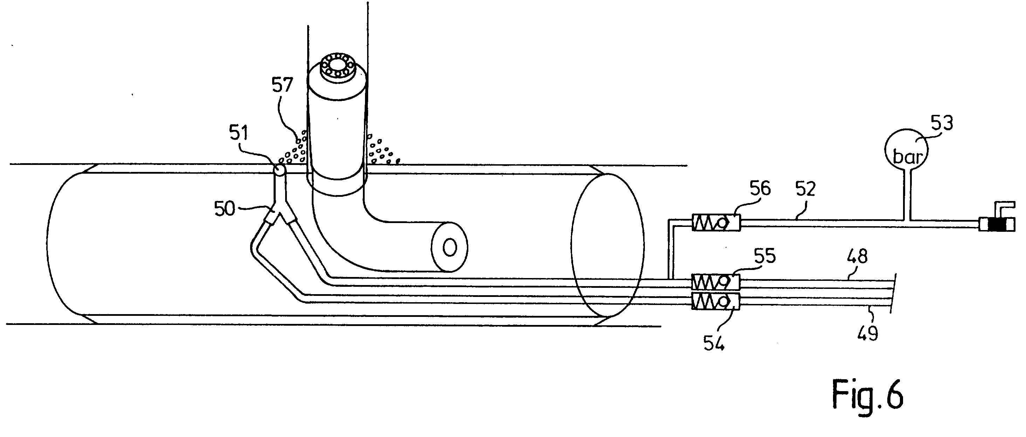

In Fig. 6 ist das Leitungssystem des zu verpressenden Materials veranschaulicht. Zwei Zuführungen 48, 49 münden in eine Mischkammer 50 mit Preßdüse 51. Durch die Zuführungen 48, 49 sind zwei Komponenten, beispielsweise eines aushärtbaren Kunstharzes, zur Mischkammer 50 zuzuführen, wo sie gemischt werden und unter entsprechendem Druck zur Rohrsanierung durch die Preßdüse 51 ausgepreßt werden.

Eine Preßluftleitung 52 ist mit einem Drucksensor 53 versehen und an die Zuführung 48 angeschlossen. Alle Leitungen 48, 49 52 sind mit entsprechenden Rückschlagventilen 54 versehen, um einen Rückstrom des jeweils in der Leitung strömenden Mediums zu verhindern.

Über die Druckluftleitung 52 kann die Leitung 48 zwischen der Mischkammer 50 und dem Rückschlagventil 55 freigeblasen werden. Auch die Mischkammer 50 wird in dem Bereich, wo sich die Komponente der Zuführung 48 bzw. die gemischte Komponente befindet, freigepreßt. Da der Druck, der zum Säubern der Leitung 48 bzw. der Mischkammer 50 und der Auspreßdüse 51 notwendig, ist dem Verpressungsdruck des verpreßten Materials 57 entspricht, kann der Sensor 53 zur Überwachung des Verpressungsdrucks verwendet werden. Sofern hier ein zu geringer Druck angezeigt wird, muß nochmals mit aushärtendem Material nachverpreßt werden.

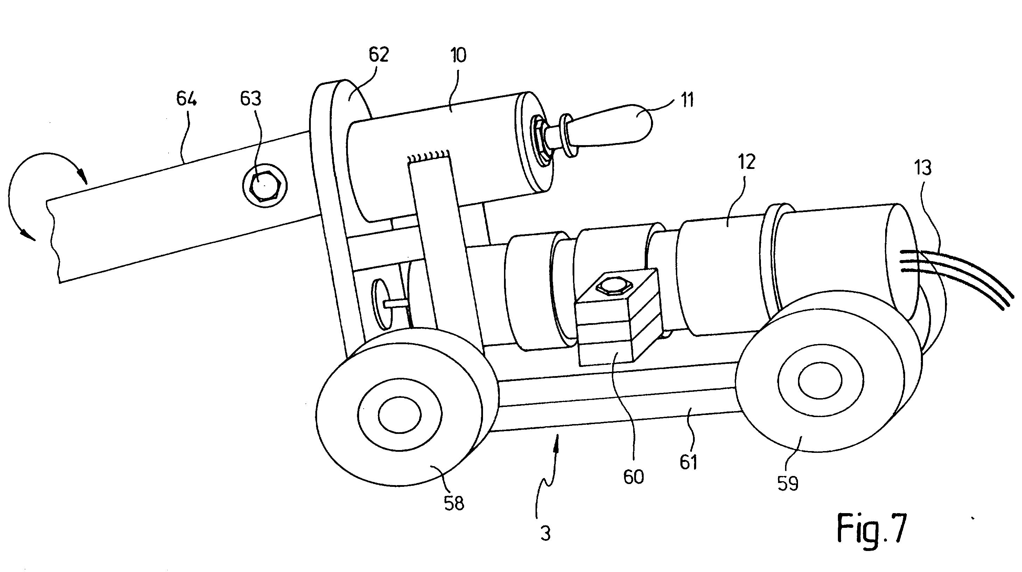

Fig. 7 zeigt eine vergrößerte Darstellung des Antriebswagens 3. Über Laufräder 58, 59 ist der Wagen 3 fahrbar. Er wird über den Motor 12 in nicht näher dargestellter Weise angetrieben. Der Motor 12 ist mit Hilfe einer Halterung 60 an einer schweren Bodenplatte 61 befestigt. Die Bodenplatte 61 wird so schwer gewählt, daß sich der Fahrwagen 3 stets in aufrechter Fahrposition im Kanalrohr befindet.

Der Drehantrieb 10 ist an einer entsprechenden drehfesten Halterung 62 befestigt. Seine nicht näher dargestellte Antriebswelle ist beispielsweise über eine Schraubverbindung 63 mit einer in im Innern einer Verkleidung 64 befindlichen und daher in Fig. 7 nicht erkennbaren Kardanwelle verbunden.

Am Drehantrieb 10 ist die Zugöse 11 befestigt, an dem ein entsprechendes, nicht dargestelltes Zugseil zu befestigen ist.

Die Rohrsanierung findet wie folgt statt. Zunächst wird ein dem Durchmesser des Hauptkanalrohrs entsprechender Sanierungspacker 2 ausgewählt. In diesem wird sodann die aus den beschriebenen Komponenten bestehende Baueinheit mit Zusatzdichtkörper 9, 14 eingeschoben und mit Hilfe der Spannschelle 4 verspannt. Dieser modulare Aufbau weist den Vorteil auf, daß der gleiche Zusatzdichtkörper 9 bzw. 14 bei unterschiedlich breiten Sanierungspackern 2 verwendbar ist.

Anschließend wird mit Hilfe des Antriebswagens 3 der Sanierungspacker 2 auf Höhe der zu sanierenden Abzweigung gefahren. Mit Hilfe des Drehantriebs 10 kann nun der Sanierungspacker 2 so gedreht werden, bis der Zusatzdichtkörper 9 bzw. 14 vor dem Abzweig liegt. Die Bodenplatte 61 ist so schwer, daß der Antriebswagen 3 genügend Gegenmoment aufbringt, um den Sanierungspacker 2 zu drehen.

Nun kann der Zusatzdichtkörper 9, 14 mit Hilfe des Antriebsmotors 21 und der Zugseile 33, 36 in den Abzweig eingefahren werden. Durch das Übersetzungsgetriebe 25 sowie die durch die Seilwinde 27 gebildete Rutschkupplung ist die Zugkraft dabei nach obenhin begrenzt. Der Zusatzdichtkörper 9 bzw. 14 ist somit vor Beschädigung geschützt, sofern er auf ein Hindernis trifft. Ein solches Hindernis kann beispielsweise eine Querschnittsverjüngung des Rohrabzweigs oder ähnliches darstellen.

Da der Zusatzdichtkörper 9, 14 im Innern des Sanierungspackers 2 stets eng von den jeweiligen Führungselementen 16, 17, 18, 19, 20 umschlossen ist, kann er auch in teilweise ausgefahrenem Zustand aufgebläht werden. Sein Ausdehnungsvolumen im Innern des Sanierungspackers ist hierbei genauso begrenzt, wie durch die zu sanierende Rohrabzweigung außerhalb des Sanierungspackers 2. Er kann somit nicht überdehnt werden.

Nunmehr kann das Verpreßmaterial 57 durch die Zuleitungen 48, 49 eingedrückt werden. Nach dem mit Hilfe des Sensors 53 und/oder des Sensors 46 sichergestellt ist, daß mit ausreichend hohem Druck verpreßt wurde und über die Preßluftzuführung 52 die Mischkammer 50 und die Auspreßdüse 51 frei geblasen wurden, muß nur noch das Aushärten des Materials 57 abgewartet werden, um den Zusatzdichtkörper 9, 14 zu entspannen, mit Hilfe des Antriebs 21 einzuziehen und anschließend die gesamte Vorrichtung 1 wieder aus dem Hauptkanal zu entfernen.

Durch die Ausbildung der Vorrichtung gemäß der Erfindung können auch längere Zusatzdichtkörper, z.B. mit einer Länge von 60 cm oder mehr, verwendet werden, was bei Abzweigungen, die eine solche Einfahrlänge zulassen, von Vorteil ist. Derselbe Zusatzdichtkörper kann ohne zusätzlichen Aufwand zugleich bei Abzweigungen verwendet werden, in denen ein so langer Zusatzdichtkörper beim Ausfahren auf Hindernisse stößt.

### Bezugszeichenliste:

1. Vorrichtung
2. Sanierungspacker
3. Antriebswagen
4. Spannschelle
5. Rollenanordnung
6. Rollenanordnung
7. Gelenkwelle
8. Rahmen
9. Zusatzdichtkörper
10. Drehantrieb
11. Zugöse
12. Fahrmotor
13. Kabel
14. Zusatzdichtkörper
15. Kamera
16. Metallkorb
17. Führungsrolle
18. Führungsrolle
19. Halbschale
20. Führungsrolle
21. Antriebsmotor
22. Teil
23. Teil
24. Winkelgetriebe
25. Übersetzungsgetriebe
26. Zahnriehmen
27. Seilwinde
28. Schlitten
29. Führungsstange
30. Führungsstange
31. Querstrebe
32. Bowdenzug
33. Zugseil
34. Zugfeder
35. Zugfeder
36. Zugseil
37. Antriebswelle
38. Spiralschlauch
39. Gummischlauch
40. Schlauchschelle
41. Schlauchschelle
42. Endstück
43. Druckluftleitung
44. Zuleitung
45. Zwischenraum
46. Sensor
47. Leitung
48. Zuführung
49. Zuführung
50. Mischkammer
51. Preßdüse
52. Preßluftleitung
53. Drucksensor
54. Rückschlagventil
55. Rückschlagventil
56. Rückschlagventil
57. Verpressmaterial
58. Laufrad
59. Laufrad
60. Halterung
61. Bodenplatte
62. Halterung
63. Schraubverbindung
64. Verkleidung

## Patentansprüche

1. Vorrichtung zur Sanierung von Kanalrohren mit einem in einem Kanalrohr einführbaren Dichtkörper, von dem aus ein Zusatzdichtkörper (9, 14,) dessen Oberfläche wenigstens teilweise eine aufblähbare Hülle (39) umfaßt, in einen Abzweig des Kanalrohrs einführbar ist, dadurch gekennzeichnet, daß der Zusatzdichtkörper (9, 14) in teilweise ausgefahrenem Zustand aufblähbar ist, wobei Mittel (16, 17, 18, 19, 20) vorgesehen sind, um das Volumen für den nicht ausgefahrenen Teil (22) des Zusatzdichtkörpers (9, 14) in aufgeblähtem Zustand zu begrenzen.

2. Vorrichtung nach Anspruch 1, dadurch gekennzeichnet, daß die Mittel zur Volumenbegrenzung einen den nicht ausgefahrenen Teil (22) der aufblähbaren Hülle (39) des Zusatzdichtkörpers (9, 14) wenigstens teilweise umschließenden starren Rahmen (16, 19) umfassen.

3. Vorrichtung nach Anspruch 2, dadurch gekennzeichnet, daß ein Antrieb (21, 24, 25) zum Ein- und Ausfahren des Zusatzdichtkörpers (9, 14) vorgesehen ist.

4. Vorrichtung Anspruch 3, dadurch gekennzeichnet, daß der Antrieb einen Elektromotor (21) umfaßt.

5. Vorrichtung nach einem der vorgenannten Ansprüche, dadurch gekennzeichnet, daß ein mit dem Zusatzdichtkörper (9, 14) verbindbarer Schlitten (28) an Führungselementen (29, 30) geführt wird.

6. Vorrichtung nach einem der Ansprüche 3, 4, 5, dadurch gekennzeichnet, daß der Antrieb für den Zusatzdichtkörper (9, 14) ein Übersetzungsgetriebe (25) und/oder eine Kraftbegrenzung (27) umfaßt.

7. Vorrichtung nach einem der Ansprüche 3-6, dadurch gekennzeichnet, daß der Antrieb für den Zusatzdichtkörper (9, 14) ein Zugelement (33, 36) umfaßt, das in zwei Zugrichtungen am Schlitten (28) angreift.

8. Vorrichtung nach einem der vorgenannten Ansprüche, dadurch gekennzeichnet, daß ein Antriebswagen (3) zum zum Verfahren der Vorrichtung (1) vorgesehen ist.

9. Vorrichtung nach Anspruch 8, dadurch gekennzeichnet, daß Zugelemente (11) zum Zurückziehen der Vorrichtung (1) am Antriebswagen (3) vorgesehen sind.

10. Vorrichtung nach einem der Ansprüche 8-9, dadurch gekennzeichnet, daß eine Gelenkwelle (7) zum Verdrehen der Vorrichtung (1) gegenüber dem Antriebswagen (3) vorgesehen ist.

11. Vorrichtung nach einem der vorgenannten Ansprüche, dadurch gekennzeichnet, daß die Vorrichtung (1) mit Laufrollen zum Abrollen an dem Kanalrohr versehen ist.

12. Vorrichtung nach einem der vorgenannten Ansprüche, dadurch gekennzeichnet, daß ein Sensor (53) zur Überwachung des Verpressungsdrucks vorgesehen ist.

13. Vorrichtung nach Anspruch 12, dadurch gekennzeichnet, daß der Sensor unmittelbar im Bereich des verpreßten Materials (57) angeordnet ist.

14. Vorrichtung nach einem der Ansprüche 12-13, dadurch gekennzeichnet, daß der Sensor (53) im Drucksystem der Vorrichtung (1) angeordnet ist.

15. Vorrichtung nach einem der vorgenannten Ansprüche, dadurch gekennzeichnet, daß der Zusatzdichtkörper (9, 14) und/oder die Mittel zum Antrieb des Zusatzdichtkörpers (9, 14) lösbar in der Vorrichtung (1) befestigt sind.

16. Verfahren zur Sanierung von Kanalrohren unter Verwendung eines in ein Kanalrohr einführbaren Dichtkörpers, von dem aus ein Zusatzdichtkörper (9, 14,) dessen Oberfläche wenigstens teilweise eine aufblähbare Hülle (39) umfaßt, in einen Abzweig des Kanalrohrs eingeführt wird, dadurch gekennzeichnet, daß eine Vorrichtung nach einem der vorgenannten Ansprüche verwendet wird.

## Claims

1. Device for the repair of ducts with a sealing element insertable into a duct, from which an additional sealing element (9, 14), the surface of which comprises at least partly an inflatable casing (39), can be inserted into a branch of the duct, characterised in that the additional sealing element (9, 14) can be inflated in a partly retracted position, whereby means (16, 17, 18, 19, 20) are provided to limit the volume for the non-retracted part (22) of the additional sealing element (9, 14) in an inflated state.

2. Device according to claim 1, characterised in that the means for restricting the volume comprise a rigid frame (16, 19) at least partly enclosing the non-retracted part (22) of the inflatable casing (39) of the additional sealing element (9, 14).

3. Device according to claim 2, characterised in that a drive (21, 24, 25) is provided for inserting and removing the additional sealing element (9, 14).

4. Device according to claim 3, characterised in that the drive comprises an electric motor (21).

5. Device according to one of the preceding claims, characterised in that a slide (28) connectable with the additional sealing element (9, 14) is guided on guide elements (29, 30).

6. Device according to one of claims 3, 4, 5, characterised in that the drive for the additional sealing element (9, 14) comprises a transmission (25) and/or a power restrictor (27).

7. Device according to one of claims 3-6, characterised in that the drive for the additional sealing element (9, 14) comprises a traction element (33, 36) which acts in two pulling directions on the slide (28).

8. Device according to one of the preceding claims, characterised in that a drive car (3) is provided for moving the device (1).

9. Device according to claim 8, characterised in that traction elements (11) are provided for pulling back the device (1) on the drive car (3).

10. Device according to one of claims 8-9, characterised in that an articulated shaft (7) is provided for rotating the device (1) relative to the drive car (3).

11. Device according to one of the preceding claims, characterised in that the device (1) is provided with rollers for rolling onto the duct.

12. Device according to one of the preceding claims, characterised in that a sensor (53) is provided for monitoring the compression.

13. Device according to claim 12, characterised in that the sensor is arranged directly in the region of the compressed material (57).

14. Device according to one of claims 12-13, characterised in that the sensor (53) is arranged in the pressure system of the device (1).

15. Device according to one of the preceding claims, characterised in that the additional sealing element (9, 14) and/or the means for operating the additional sealing element (9, 14) are secured detachably in the device (1).

16. Method for cleaning ducts using a sealing element insertable into a duct, from which an additional sealing element (9, 14), the surface of which comprises at least partly an inflatable casing (39), is inserted into a branch of the duct, characterised in that a device according to one of the preceding claims is used.

## Revendications

1. Dispositif pour la rénovation ou la réparation de canalisations, comportant un corps d'étanchéité pouvant être introduit dans une canalisation, à partir duquel un corps d'étanchéité auxiliaire (9,14), dont la surface comporte au moins partiellement une enveloppe gonflable (39), peut être introduit dans une dérivation de la canalisation,
caractérisé en ce que le corps d'étanchéité auxiliaire (9,14) est gonflable dans l'état partiellement sorti, des moyens (16,17,18,19,20) étant prévus pour limiter le volume pour la partie non sortie (22) du corps d'étanchéité auxiliaire (9,14) dans l'état gonflé.

2. Dispositif selon la revendication 1,
caractérisé en ce que les moyens pour limiter le volume comportent un bâti rigide (16,19) entourant au moins partiellement la partie non sortie (22) de l'enveloppe gonflable (39) du corps d'étanchéité auxiliaire (9,14).

3. Dispositif selon la revendication 2,
caractérisé en ce qu'un entraînement (21,24,25) pour introduire et sortir le corps d'étanchéité auxiliaire (9,14) est prévu.

4. Dispositif selon la revendication 3,
caractérisé en ce que l'entraînement comporte un moteur électrique (21).

5. Dispositif selon une des revendications précitées,
caractérisé en ce qu'un chariot (28) pouvant être relié au corps d'étanchéité auxiliaire (9,14) est guidé sur des éléments de guidage (29,30).

6. Dispositif selon une des revendications 3,4,5,
caractérisé en ce que l'entraînement pour le corps d'étanchéité auxiliaire (9,14) comporte un moyen de démultiplication (25) et/ou un moyen de limitation de force (27).

7. Dispositif selon une des revendications 3-6,
caractérisé en ce que l'entraînement pour le corps d'étanchéité auxiliaire (9,14) comporte un élément de traction (33,36) qui s'engage sur le chariot (28) dans deux directions de traction.

8. Dispositif selon une des revendications précitées,
caractérisé en ce qu'un chariot d'entraînement (3) est prévu pour déplacer le dispositif (1).

9. Dispositif selon la revendication 8,
caractérisé en ce que des éléments de traction (11) pour retirer le dispositif (1) sont prévus sur le chariot d'entraînement (3).

10. Dispositif selon une des revendications 8-9,
caractérisé en ce qu'un arbre de transmission (7) pour faire tourner le dispositif (1) par rapport au chariot d'entraînement (3) est prévu.

11. Dispositif selon une des revendications précitées,
caractérisé en ce que le dispositif (1) est muni de roues de roulement pour rouler dans la canalisation.

12. Dispositif selon une des revendications précitées,
caractérisé en ce qu'un capteur (53) pour surveiller la pression de pressage est prévu.

13. Dispositif selon la revendication 12,
caractérisé en ce que le capteur est agencé directement dans la zone de la matière pressée (57).

14. Dispositif selon une des revendications 12-13,
caractérisé en ce que le capteur (53) est agencé dans le système de pression du dispositif (1).

15. Dispositif selon une des revendications précitées,
caractérisé en ce que le corps d'étanchéité supplémentaire (9,14) et/ou les moyens pour l'entraînement du corps d'étanchéité auxiliaire (9,14) sont fixés de façon amovible dans le dispositif (1).

16. Procédé pour rénover ou réparer des canalisations en utilisant un corps d'étanchéité pouvant être introduit dans une canalisation, à partir duquel un corps d'étanchéité auxiliaire (9,14), dont la surface comporte au moins partiellement une enveloppe gonflable (39), est introduit dans une dérivation de la canalisation,
caractérisé en ce qu'un dispositif selon une des revendications précitées est utilisé.
